Europäisches Patentamt

European Patent Office

Office européen des brevets

(19)

(11) EP 1 079 370 A2

(12) **EUROPEAN PATENT APPLICATION**

(43) Date of publication:
28.02.2001 Bulletin 2001/09

(51) Int Cl.[7]: **G10L 15/06**

(21) Application number: 00307280.8

(22) Date of filing: 23.08.2000

(84) Designated Contracting States:
**AT BE CH CY DE DK ES FI FR GB GR IE IT LI LU
MC NL PT SE**
Designated Extension States:
**AL LT LV MK RO SI**

(30) Priority: 26.08.1999 GB 9920257

(71) Applicant: CANON KABUSHIKI KAISHA
Tokyo (JP)

(72) Inventor: **Shao, Yuan,**
**Canon Research Centre Europe Limited**
**Guildford, Surrey GU2 5YJ (GB)**

(74) Representative:
**Beresford, Keith Denis Lewis et al**
**BERESFORD & Co.**
**High Holborn**
**2-5 Warwick Court**
**London WC1R 5DJ (GB)**

(54) **Method for training a speech recognition system with detection of confusable words**

(57)     A speech recognition system is provided having a training mode in which users can add new vocabulary words to the recognition system. The training system includes a system which compares a new model with each of the existing models to ensure that a user is warned if, during the training mode, a new word is added which is acoustically similar, and hence confusable, with an existing vocabulary word. This model comparison system uses a measure of the variation between renditions of training utterances for the new word and uses this in its calculations.

Fig. 1

EP 1 079 370 A2

**Description**

The present invention relates to an apparatus and method for comparing models which are to be used in a recognition system. The invention has particular although not exclusive relevance to speech recognition systems which can be trained by a user and which detects when acoustically similar (confusable) words are input as vocabulary words of such a speech recognition system.

Speech recognition systems currently available today can be broadly categorised into large vocabulary systems and small vocabulary systems. Large vocabulary systems are used for applications such as dictation whilst small vocabulary systems are used for machine control, such as voice-activated dialling on a telephone. The latter type typically require the user to train the vocabulary words which the speech recognition system will be able to recognise. This involves the user inputting a number of training utterances of each vocabulary word from which a model for the vocabulary word is generated. One problem with this kind of system is that the user sometimes selects vocabulary words which are acoustically similar, such as "dog" and "hog", which can reduce the recognition accuracy of the speech recognition system.

US 4972485 addresses this problem and provides a system which compares new training utterances with previously stored models and which warns the user if the new training utterances are similar to previous models. Whilst the technique described in this earlier US patent addresses the problem of acoustically similar vocabulary words, the solution it suggests suffers from a number of problems. The main problem is that it does not test the generated models. Instead, it compares training utterances against existing models. This can lead to over-sensitivity or under-sensitivity depending on the test utterances. The technique also depends on the order in which the training utterances are compared with the existing models, which is clearly undesirable.

One aspect of the present invention aims to provide an alternative technique for determining if a new vocabulary word is confusingly similar to an existing vocabulary word.

According to another aspect, the present invention provides a model comparison apparatus comprising: means for receiving first and second models for first and second examples respectively and corresponding first and second measures of the variation between a plurality of renditions of the respective examples; means for comparing the model for the first example with the model for the second example and for outputting a comparison result; and means for determining, using said comparison result and said measures of the variation for said first and second examples, whether or not the model for the first training example is sufficiently similar to the model for the second training example that a subsequent rendition of the first training example might be mis-recognised as a rendition of the second training example by a recognition system or vice versa, i.e. a subsequent rendition of the second training example might be mis-recognised as a rendition of the first training example.

According to another aspect, the present invention provides a model comparison apparatus comprising: means for receiving a plurality of input signals each representative of a rendition of a current training example; means for generating a model representative of the current training example from the plurality of input signals; means for calculating a measure of the variation between the renditions of the current training example; means for comparing the model for the current training example with a reference model generated from a number of renditions of a previous training example and for outputting a comparison result; and means for determining, using said comparison result, said measure of the variation between said renditions of the current training example and the corresponding measure of the variation between said renditions of the previous training example, whether or not the model for the current training example is sufficiently similar to the reference model that a subsequent rendition of the current training example might be mis-recognised as a rendition of the previous training example by a recognition system. Such an apparatus can be used to check for words which are acoustically similar and which may, therefore, be mis-recognised by a speech recognition system.

This aspect also provides a pattern recognition system comprising: storage means for storing a plurality of reference models each representative of a respective pattern; means for receiving input signals representative of a pattern; recognition means for comparing input signals with said stored reference models to provide a recognition result; training means for allowing a user to add new reference models to the stored reference models; and mode selection means operable for passing said input signals to said recognition means or to said training means in dependence upon a user selection; characterised in that the training means comprises the model comparison apparatus discussed above.

Exemplary embodiments of the present invention will now be described with reference to the accompanying drawings in which:

Figure 1 is a block diagram illustrating the form of a speech recognition system embodying the present invention;

Figure 2 schematically illustrates the difference between two word models and the variation in pronunciation of each of the word models;

Figure 3 is a flowchart illustrating the processing steps involved in determining if a new vocabulary word is confusingly similar with an existing vocabulary word;

Figure 4 is a flowchart illustrating the processing steps involved in determining the variation in pronunciation of the new vocabulary word; and

Figure 5 is a flowchart illustrating the processing steps involved in a confusability test which forms part of the process steps shown in Figure 3.

Embodiments of the present invention can be implemented using computer hardware circuits, but the embodiment to be described is implemented in software which is run in conjunction with processing hardware such as a personal computer, workstation, photocopier, facsimile machine or the like. This software may be provided on a recording medium such as a floppy disc or may be downloadable on a carrier signal from, for example, the Internet.

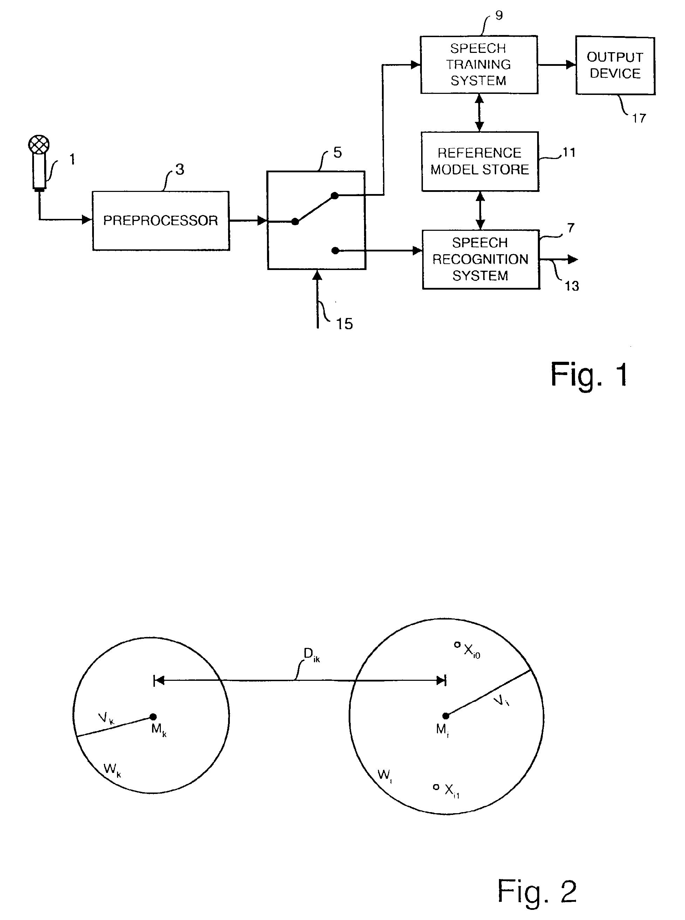

Figure 1 shows a block diagram illustrating the main components of a speech recognition system embodying the present invention. As shown, the system comprises a microphone 1 for converting a user's input speech into corresponding electrical signals which are applied to a preprocessor 3 which converts the input speech signal into a sequence of parameter frames, each representing a corresponding time frame of the input speech signal. The sequence of parameter frames are then supplied, via switch 5, either to a speech recognition system 7 or a speech training system 9. The speech recognition system operates to compare the input sequence of parameter frames with a set of reference models which are stored in a reference model store 11 and to output a recognition result 13. Each of the reference models comprises a sequence of parameter frames expressed in the same kind of parameters as those of the input speech to be recognised and are generated by the speech training system 9 during a training mode, when the switch 5 operates to connect the preprocessor 3 to the speech training system 9. The position of the switch 5 is controlled by a user input, as represented by arrow 15. A description of an exemplary preprocessor, speech recognition system and reference models which may be used in this embodiment, can be found in the applicant's earlier European application EP 0789349, the content of which is incorporated herein by reference.

In this embodiment, the user can enter the training mode at any time in order to add one or more new reference models to the system. When in the training mode, the speech training system 9 compares the new input words with the stored reference models and warns the user via the output device 17 (such as a loudspeaker or a display), if the new word is confusingly similar to an existing reference model. In this embodiment, a new word is regarded as confusable to an existing word if any utterance of the new word has more than a predetermined chance of being mis-recognised as an existing word. In this embodiment, an utterance will be mis-recognised if it is nearer (in the parameter frame space) to an existing word model than to the model which represents the new word. To determine this, the speech training system 9 estimates the probability of an utterance being closer to the correct model than to any of the other existing models. As those skilled in the art will appreciate, this probability depends upon the extent to which the pronunciation of the new word may vary.

In this embodiment, the variation in pronunciation is modelled in the parameter space, i.e. the variation of the parameter frames extracted from the raw speech data by the preprocessor 3. Referring to Figure 2, assuming $M_i$ is the new word model generated from the two training examples $X_{i0}$ and $X_{i1}$ for the new word $W_i$, then we can derive, with a predefined confidence level, a variation range $V_i$ of the pronunciation of the new word $W_i$ from the training examples $X_{i0}$ and $X_{i1}$. In a similar way, a pronunciation variation range $V_k$ can also be determined, with the same predefined confidence level, for existing word $W_k$ from its training examples.

In this embodiment, the speech training system 9 then determines if the new word is confusingly similar to an existing word by performing the following comparison for each of the existing word models:

$$V_i < D_{ik}/2 - Th$$
$$V_k < D_{ik}/2 - Th \qquad (1)$$

where $D_{ik}$ is the distance between the models $M_i$ and $M_k$ and Th is a threshold used for safety reasons (which may be zero). Provided these conditions are met, the new word is added to the stored reference models. Otherwise the user is warned that there is a possibility of confusion between the new word and the existing word. Therefore, in this embodiment, the speech training system 9 not only checks the closeness of the new word model with the existing reference models, but uses the prediction of an acoustic realisation of the word as well, which is derived from statistics of training examples. As those skilled in the art will appreciate, the assumption being made with these calculations is that the pronunciation of some words may vary to a larger extent than the pronunciation of other words and if the pronunciation of a word is more variable, then it needs to be more distant from others to avoid potential confusability problems.

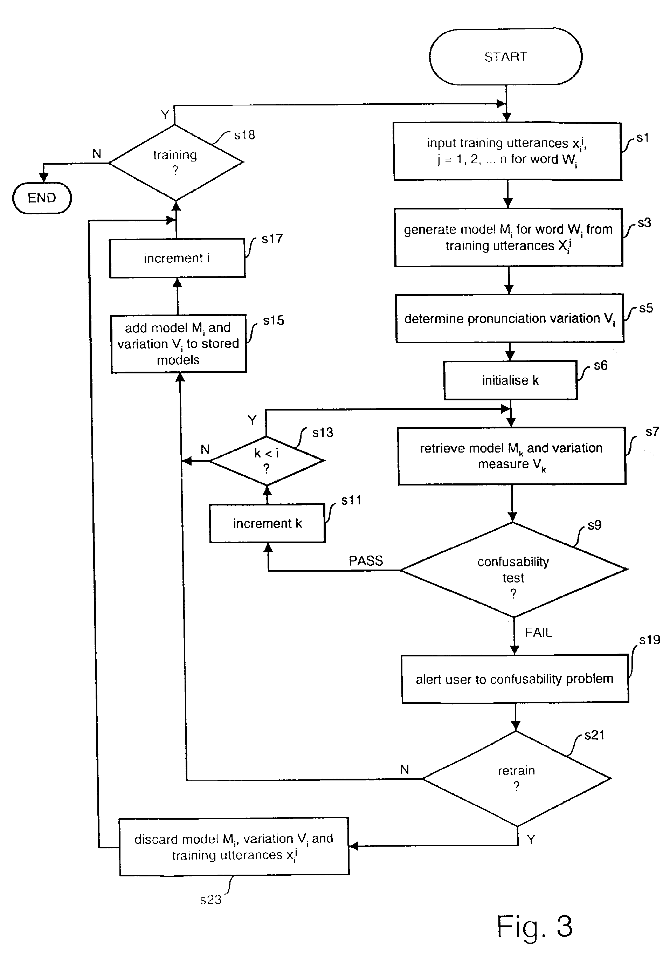

A more detailed description of the way in which the speech training system 9 checks for confusability will now be given with reference to Figures 3, 4 and 5. As shown in Figure 3, in step sl, the speech training system 9 operates to receive $n(n{\geq}2)$ input training utterances $X_i^j$ j = 1, 2, ... n for the new word $W_i$. From these training utterances, the speech training system 9 generates, in step s3, a model $M_i$ for the new word $W_i$. To do this, the speech training system may use the modelling technique described in US 4751737 or more preferably the technique described in the applicant's copending British application GB 9909429.4, the contents of which are incorporated herein by reference. In both techniques, the training utterances are aligned with each other using a dynamic programming alignment algorithm and then the aligned parameter frames from the utterances are combined onto an averaged time axis.

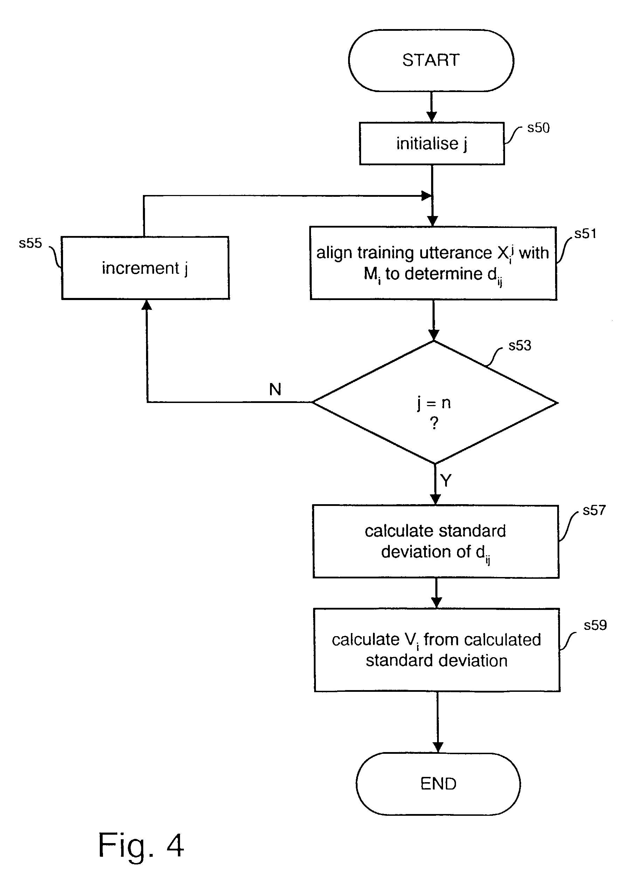

The speech training system 9 then determines, in step s5, the pronunciation variation $V_i$ for the new word $W_i$ from the training utterances $X_i^j$. Figure 4 shows in more detail the processing steps involved, in this embodiment, in determining this pronunciation variation $V_i$. As shown, in step s50, the system initialises the loop counter j to one (so that it points to the first training utterance of the new word). The processing then proceeds to step s51, where the speech training system 9 aligns the current training utterance $X_i^j$ with the model $M_i$ which has been generated for the new word, to determine a distance measure $d_{ij}$ representative of the similarity between the training utterance $X_i^j$ and the model $M_i$. In this embodiment, this alignment step s51 uses a standard dynamic programming algorithm to align the parameter frames of the training utterance $X_i^j$ with the parameter frames of the model $M_i$. A suitable dynamic programming algorithm which can be used in this step is described in the applicant's earlier European patent application EP 0789349.

The processing then proceeds to step s53 where a check is made to identify whether or not all the training utterances $X_i^j$ have been aligned with the model $M_i$. If not, then j is incremented in step s55 and the processing returns to step s51 where the next training utterance is aligned with the model. Once all the training utterances for the new word have been aligned with the model for the new word, the processing proceeds to step s57 where the standard deviation ($s_i$) of the distance measures $d_{ij}$ is calculated using:

$$S_i = \sqrt{\sum_{j=1}^{n} [d_{ij}^2/(n-1)]} \qquad (2)$$

The processing then proceeds to step s59 where the pronunciation variation range $V_i$, for a given confidence level, is calculated from the standard deviation calculated in step s57. Assuming that the pronunciation variation has a standard Gaussian distribution, a variation range ($V_i$) of three times the standard deviation ($s_i$) gives a confidence level of 99.74%. In other words a subsequent pronunciation of the new word has a chance of 99.74% to be within the distance of $V_i$ to the model $M_i$.

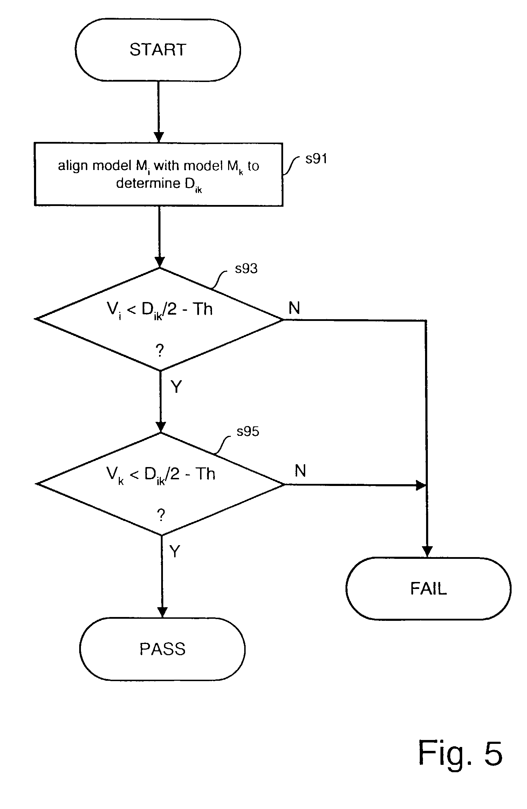

Returning to Figure 3, after the pronunciation variation $V_i$ has been determined in step s5, the processing proceeds to step s6 where a loop counter k (used to loop through all the stored reference models) is initialised to zero. The processing then proceeds to step s7 where the speech training system 9 retrieves model $M_k$ and its associated variation measure $V_k$ from the reference model store 11. The processing then proceeds to step s9 where the speech training system 9 performs the confusability test discussed above. Figure 5 shows in more detail the steps involved in performing this confusability test in this embodiment. As shown, the first step s91 in this confusability test is to align the model $M_i$ for the new word with the model $M_k$ for the existing word to determine a distance measure ($D_{ik}$) representative of the similarity between the model $M_i$ and model $M_k$. As those skilled in the art will appreciate, this aligning step uses the same dynamic programming algorithm used to align the test utterances with the model for the new word in step s51 discussed above. The processing then proceeds to steps s93 and s95 where the speech training system 9 performs the comparisons of equation (1) above. As shown, for the confusability test to pass, both $V_i$ and $V_k$ must be less than $D_{ik}/2$-Th, otherwise the confusability test fails.

Returning to Figure 3, if the confusability test passes, then the processing proceeds to step sll where the loop counter k is incremented by one so that the next reference model can be retrieved from the reference model store 11 and compared with the model for the new word. The processing then passes to step s13 where the loop pointer k is compared with i. If k is less than i, then this means that there are further reference models to be compared with the new word (since i is set equal to one more than the number of reference models in the store 11) and the processing returns to step s7. If, on the other hand, k equals i, then there are no more reference models to be compared with the new word model and the processing proceeds to step s15 where the model $M_i$ for the new word and its pronunciation variation measure Vi are stored in the reference model store 11. The processing then proceeds to step s17, where the pointer i is incremented by one. The processing then proceeds to step s18, where a check is made to ensure the system is still in its training mode. If it is not, then the processing ends. Otherwise, the processing returns to step sl where the training utterances for the next new input word are received.

If at step s9, the confusability test fails, then the processing proceeds to step s19 where the speech training system alerts the user to the confusability problem. As mentioned above, this is achieved by the speech training system 9 outputting an appropriate warning via the output device 17. The processing then proceeds to step s21 where the system awaits a user instruction, either to retrain the word or to ignore the warning and keep the new word model. If the user decides to retrain the word, then the processing proceeds to step s23 where the model $M_i$ and the training utterances $X_i^j$ are discarded. The processing then returns to step s18 where the system determines if it is still in its training mode before returning to step s1. If on the other hand, the user decides to keep the new word, regardless of its possible confusability with an existing word, the processing proceeds to step s15, where the model $M_i$ and the measure of variability $V_i$ are added to the reference model store 11.

As those skilled in the art will appreciate, the above technique for determining whether or not a new input word is confusingly similar to an existing word has a number of advantages, including:

i) the use of a pronunciation variation measure for the confusability check reduces the dependency of the testing results on individual training examples.

ii) The confusability test is independent of the order of the training utterances.

iii) The test condition is more realistic than when training utterances are being progressively processed, such as in the prior art system described in US 4972485, although the drawback is that the user will not be alerted until after all the training utterances have been input.

A number of modifications which can be made to the above embodiment will now be described.

In the above embodiment, each of the reference models represented a different word. In an alternative embodiment, more than one model will be stored for each word. This provides improved recognition performance when the pronunciation variation of the word is large. As those skilled in the art will appreciate, in such an embodiment, the above confusability test would only be performed between models representing different words. It would not be used against models for the same word.

In the above embodiment, each of the reference models represented a single word. As those skilled in the art will appreciate, one or more of the reference models may represent a phrase having more than one word. The reference models may also represent sub-word units, such as syllables. They may also represent arbitrary noise sounds which have no linguistic meaning, but which the user wishes to use as a reference model.

As those skilled in the art will also appreciate, the above described technique for comparing a new model with existing models can be used in applications other than in speech recognition. For example, this technique could be used to check for confusingly similar models in an automatic shape identification system, such as an optical character recognition system or a target identification system.

In the above embodiment, a dynamic programming algorithm was used which provided a distance measure during the calculation of the pronunciation variation measure ($V_i$) and during the determination of the similarity between the new model and the existing models ($D_{ik}$). As those skilled in the art will appreciate, probability-based dynamic programming algorithms could be used in which case a different comparison to the comparison shown in equation (1) above would be performed in the confusability test. For example, the following comparison could be used:

$$V_i > L_{ik} + Th'$$
$$V_k > L_{ik} + Th' \qquad (3)$$

where $L_{ik}$ is the probabilistic measure of the similarity between the model for the new word $W_i$ and the model for the existing word $W_k$, $V_i$ and $V_k$ are variation measures obtained using the same probabilistic DP algorithm used in the calculation of $L_{ik}$ and Th' is another threshold.

In addition, as those skilled in the art will appreciate, the technique used to compare the word models and the training utterances with the new word model may use a comparison technique other than dynamic programming, such as artificial neural network techniques or hidden Markov model techniques. However, dynamic programming is preferred, since it can identify the optimum alignment between the signals being compared.

In the above embodiment, the pronunciation variation measure was calculated using the standard deviation of the distance measures calculated from the comparison of the training utterances with the generated word model. As those skilled in the art will appreciate, other variation measures could be used, for example, the following measure

could be used:

$$V_i \; = \; \frac{\alpha \sum\limits_{j=1}^{n} d_{ij}}{n} \qquad\qquad (4)$$

where $\alpha$ is a user defined confidence constant. If $\alpha$ is too small then confusion may still arise even though the test passes and if $\alpha$ is too large then the confusability test will be difficult to pass. This measure of the pronunciation variation can be used since each of the distances $d_{ij}$ represents a measure of the pronunciation variation.

In the above embodiments, the input speech was received from a microphone forming part of the speech recognition system. As those skilled in the art will appreciate, the input speech may be received from a remote user via, for example, a telephone line. Additionally, the speech signals may already have been processed so that, for example, only a model and the measure of variation are provided to the training system. In this case, the training system only has to compare the new model with the stored reference models and determine if the new model is confusingly similar with any existing models, from the received new model and measure of pronunciation variation for the new model.

As those skilled in the art will appreciate, the above embodiment and modifications have been described by way of example only. Various other embodiments and modifications will be apparent to those skilled in the art.

**Claims**

1.   A model comparison apparatus comprising:

   means for receiving a model representative of a current training example and a measure of the variation between a plurality of renditions of the current training example used to generate the received model;
   means for comparing the model for the current training example with a reference model generated from a number of renditions of a previous training example and for outputting a comparison result; and
   means for determining, using said comparison result, said measure of the variation between said renditions of the current training example and a corresponding measure of the variation between said renditions of the previous training example, whether or not the model for the current training example is sufficiently similar to the reference model that a subsequent rendition of the current training example might be mis-recognised as a rendition of the previous training example by a recognition system.

2.   An apparatus according to claim 1, further comprising means for receiving a plurality of input signals each representative of a rendition of the current training example;

   means for generating the model representative of the current training example from the plurality of input signals; and
   means for calculating said measure of the variation between the renditions of the current training example.

3.   An apparatus according to claim 2, wherein said means for generating said model comprises means for aligning the input signals with each other and means for combining aligned portions of the input signals to generate said model.

4.   An apparatus according to claim 3, wherein each input signal comprises a sequence of parameter frames, each parameter frame representing a corresponding portion of the rendition and wherein said aligning means comprises dynamic programming means for aligning the parameter frames of the renditions with each other.

5.   An apparatus according to claim 4, wherein said input signals are time sequential signals and wherein said combining means is operable to combine aligned parameter frames onto an averaged time axis.

6.   An apparatus according to any of claims 2 to 5, wherein said calculating means comprises means for comparing each rendition with the model representative of the current training example to generate a respective similarity score representative of the similarity between the model and the corresponding rendition and means for calculating said measure from said similarity scores.

**7.** An apparatus according to claim 6, wherein said means for calculating said measure from said similarity scores comprises means for calculating a measure of the variability of said similarity scores and means for calculating said measure of the variation between the renditions from the calculated measure of the variability of said similarity scores.

**8.** An apparatus according to claim 7, wherein said means for calculating a measure of the variability of said similarity scores is operable to calculate the standard deviation of said similarity scores and wherein said measure of the variation between the renditions is calculated from said standard deviation.

**9.** An apparatus according to any of claims 2 to 8, wherein each of said input signals is representative of a pronunciation of a unit of speech.

**10.** An apparatus according to claim 9, wherein said unit of speech comprises a word or phrase.

**11.** An apparatus according to any preceding claim, wherein said comparing means comprises means for aligning the model of the current training example with the reference model for the previous training example.

**12.** An apparatus according to claim 11, wherein each of said models comprises a sequence of parameter frames, each parameter frame representing a portion of the model, wherein said aligning means comprises dynamic programming means for aligning the sequence of model parameter frames for the current training example with the sequence of model parameter frames for the previous training example and wherein said comparison result comprises a dynamic programming score representing the similarity between the two models.

**13.** An apparatus according to any preceding claim, wherein said measures of the variation between the renditions of the current and previous training examples are each scalar values representative of the degree of similarity of the respective renditions and wherein said determining means determines whether or not the model representative of the current training example is sufficiently similar to the stored reference model that a subsequent rendition of the current training example might be mis-recognised as a rendition of the previous training example by a recognition system, by comparing said scalar values with a scalar value derived from said comparison result.

**14.** An apparatus according to claim 13, wherein said determining means comprises means for performing the following comparisons:

$$V_i < D_{ik} / 2 - Th$$

$$V_k < D_{ik} / 2 - Th$$

where $V_i$ and $V_k$ are the scalar values representative of the degree of similarity of the renditions of the first training example and of the degree of similarity of the renditions of the previous training example respectively, $D_{ik}$ is the comparison result output by said comparing means and which is a scalar value representative of the similarity between the model for the current training example and the model for the previous training example and wherein $Th$ is a predefined threshold scalar value.

**15.** An apparatus according to any preceding claim, further comprising means for outputting a warning if said determining means determines that the model representative of the current training example is sufficiently similar to the stored reference model that a subsequent rendition of the current training example might be recognised as a rendition of the previous training example by a recognition system.

**16.** An apparatus according to any preceding claim, comprising storage means for storing a plurality of models each representative of a respective previous training example and wherein said comparing means is operable to compare the model of the current training example with each of the stored reference models and said determining means is operable to determine whether or not the model for the current training example is sufficiently similar to any of the stored reference models that a subsequent rendition of the current training example might be mis-recognised as a rendition of any one of the previous training examples by a recognition system.

**17.** An apparatus according to claim 16, further comprising means for storing the model for the current training example in said storage means if said determining means determines that the model for the current training example is not sufficiently similar to any of the stored reference models that a subsequent rendition of the current training example might be mis-recognised as a rendition of any of the previous training examples by a recognition system.

**18.** A pattern recognition apparatus comprising:

storage means for storing a plurality of reference models each representative of a respective pattern;
means for receiving input signals representative of a pattern;
recognition means for comparing input signals with said stored reference models to provide a recognition result;
training means for allowing a user to add new reference models to the stored reference models; and
mode selection means operable for passing said input signals to said recognition means or to said training means in dependence upon a user selection;

characterised in that said training means comprises a model comparison apparatus according to any preceding claim.

**19.** An apparatus according to claim 18, wherein said input signals are representative of speech and wherein said reference patterns are representative of a word or words.

**20.** An apparatus according to claim 18 or 19, comprising processing means for processing the input signals representative of the pattern to extract a sequence of parameter frames, each representative of a portion of the pattern.

**21.** An apparatus according to any of claims 18 to 20, wherein said recognition means and said training means employ a common dynamic programming algorithm to compare signals with the stored reference models.

**22.** A model comparison apparatus comprising:

means for receiving a plurality of input signals each representative of a rendition of a current training example;
means for generating a model representative of the current training example from the plurality of input signals;
means for calculating a measure of the variation between the renditions of the current training example;
means for comparing the model for the current training example with a reference model generated from a number of renditions of a previous training example and for outputting a comparison result; and
means for determining, using said comparison result, said measure of the variation between said renditions of the current training example and a corresponding measure of the variation between said renditions of the previous training example, whether or not the model for the current training example is sufficiently similar to the reference model that a subsequent rendition of the current training example might be mis-recognised as a rendition of the previous training example by a recognition system.

**23.** An apparatus for determining a measure of the variation between a plurality of renditions of a training example, each rendition comprising a sequence of parameter frames and each parameter frame representing a portion of the rendition of the training example, the apparatus comprising:

means for combining the sequence of parameter frames for the plurality of renditions to generate a model sequence of parameter frames representative of the training example;
means for comparing the sequence of parameter frames for each of the plurality of renditions with said model sequence of parameter frames to generate a corresponding plurality of similarity measures representing their respective similarities; and
means for combining said plurality of similarity measures to determine said variation measure.

**24.** An apparatus according to claim 23, wherein said combining means comprises means for calculating a measure of the variability of said plurality of similarity measures and means for calculating said measure of the variation between the plurality of renditions from said measure of the variability of said similarity measures.

**25.** A model comparison method comprising the steps of:

receiving a model representative of a current training example and a measure of the variation between a plurality of renditions of the current training example used to generate the received model;
comparing the model for the current training example with a reference model generated from a number of renditions of a previous training example and outputting a comparison result; and

determining, using said comparison result, said measure of the variation between said renditions of the current training example and a corresponding measure of the variation between said renditions of the previous training example, whether or not the model for the current training example is sufficiently similar to the reference model that a subsequent rendition of the current training example might be mis-recognised as a rendition of the previous training example by a recognition system.

26. A method according to claim 25, further comprising the steps of receiving a plurality of input signals each representative of a rendition of the current training example;

generating the model representative of the current training example from the plurality of input signals; and calculating the measure of the variation between the renditions of the current training example.

27. A method according to claim 26, wherein said step of generating said model comprises the steps of aligning the input signals with each other and combining aligned portions of the input signals to generate said model.

28. A method according to claim 27, wherein each input signal comprises a sequence of parameter frames, each parameter frame representing a corresponding portion of the rendition and wherein said aligning step uses dynamic programming to align the parameter frames of the renditions with each other.

29. A method according to claim 28, wherein said input signals are time sequential signals and wherein said combining step combines aligned parameter frames onto an averaged time axis.

30. A method according to any of claims 26 to 29, wherein said calculating step comprises the steps of comparing each rendition with the model representative of the current training example to generate a respective similarity score representative of the similarity between the model and the corresponding rendition and calculating said measure from said similarity scores.

31. A method according to claim 30, wherein said step of calculating said measure from said similarity scores comprises the steps of calculating a measure of the variability of said similarity scores and calculating said measure of the variation between the renditions from the calculated measure of the variability of said similarity scores.

32. A method according to claim 31, wherein said step of calculating a measure of the variability of said similarity scores calculates the standard deviation of said similarity scores and wherein said measure of the variation between the renditions is calculated from said standard deviation.

33. A method according to any of claims 25 to 32, wherein each of said input signals is representative of a pronunciation of a unit of speech.

34. A method according to claim 33, wherein said unit of speech comprises a word or phrase.

35. A method according to any of claims 25 to 32, wherein said comparing step comprises the step of aligning the model of the current training example with the reference model for the previous training example.

36. A method according to claim 34, wherein each of said models comprises a sequence of parameter frames, each parameter frame representing a portion of the model, wherein said aligning step uses dynamic programming to align the sequence of model parameter frames for the current training example with the sequence of model parameter frames for the previous training example and wherein said comparison result comprises a dynamic programming score representing the similarity between the two models.

37. A method according to any of claims 25 to 36, wherein said measures of the variation between the renditions of the current and previous training examples are each scalar values representative of the degree of similarity of the respective renditions and wherein said determining step determines whether or not the model representative of the current training example is sufficiently similar to the stored reference model that a subsequent rendition of the current training example might be mis-recognised as a rendition of the previous training example by a recognition system, by comparing said scalar values with a scalar value derived from said comparison result.

38. A method according to claim 37, wherein said determining step performs the following comparisons:

$$V_i < D_{ik} / 2 - Th$$

$$V_k < D_{ik} / 2 - Th$$

where $V_i$ and $V_k$ are the scalar values representative of the degree of similarity of the renditions of the first training example and of the degree of similarity of the renditions of the previous training example respectively, $D_{ik}$ is the comparison result output by said comparing means and which is a scalar value representative of the similarity between the model for the current training example and the model for the previous training example and wherein Th is a predefined threshold scalar value.

39. A method according to any of claims 25 to 34, further comprising the step of outputting a warning if said determining step determines that the model representative of the current training example is sufficiently similar to the stored reference model that a subsequent rendition of the current training example might be recognised as a rendition of the previous training example by a recognition system.

40. A method according to any of claims 25 to 39, comprising the step of storing a plurality of models each representative of a respective previous training example and wherein said comparing step compares the model of the current training example with each of the stored reference models and said determining step determines whether or not the model for the current training example is sufficiently similar to any of the stored reference models that a subsequent rendition of the current training example might be mis-recognised as a rendition of any one of the previous training examples by a recognition system.

41. A method according to claim 40, further comprising the step of storing the model for the current training example in said storage means if said determining step determines that the model for the current training example is not sufficiently similar to any of the stored reference models that a subsequent rendition of the current training example might be mis-recognised as a rendition of any of the previous training examples by a recognition system.

42. A model comparison method comprising the steps of:

   receiving a plurality of input signals each representative of a rendition of a current training example;
   generating a model representative of the current training example from the plurality of input signals;
   calculating a measure of the variation between the renditions of the current training example;
   comparing the model for the current training example with a reference model generated from a number of renditions of a previous training example and outputting a comparison result; and
   determining, using said comparison result, said measure of the variation between said renditions of the current training example and a corresponding measure of the variation between said renditions of the previous training example, whether or not the model for the current training example is sufficiently similar to the reference model that a subsequent rendition of the current training example might be mis-recognised as a rendition of the previous training example by a recognition system.

43. A method of determining a measure of the variation between a plurality of renditions of a training example, each rendition comprising a sequence of parameter frames and each parameter frame representing a portion of the respective rendition; the method comprising the steps of:

   combining the sequences of parameter frames for the plurality of renditions to generate a model sequence of parameter frames representative of the training example;
   comparing the sequence of parameter frames for each of the plurality of renditions with said model sequence of parameter frames to generate a corresponding plurality of similarity measures representing the respective similarities; and
   combining said plurality of similarity measures to determine said variation measure.

44. A method according to claim 43, wherein said combining step comprises the steps of calculating a measure of the variability of said similarity measures and calculating said measure of the variation between the renditions from the calculated measure of the variability of said similarity measures.

45. A storage medium storing processor implementable instructions for controlling a processor to implement the method of any one of claims 25 to 44.

**46.** Processor implementable instructions for controlling a processor to implement the method of any one of claims 25 to 44.

Fig. 1

Fig. 2

Fig. 3

START

initialise j ⟋ s50

increment j ⟋ s55

align training utterance $X_i^j$ with $M_i$ to determine $d_{ij}$ ⟋ s51

s53

$j = n$ ?

N

Y

calculate standard deviation of $d_{ij}$ ⟋ s57

calculate $V_i$ from calculated standard deviation ⟋ s59

END

Fig. 4

START

align model $M_i$ with model $M_k$ to determine $D_{ik}$ — s91

s93

$V_i < D_{ik}/2 - Th$ ? — N

Y

s95

$V_k < D_{ik}/2 - Th$ ? — N

Y

PASS

FAIL

Fig. 5